# EUROPEAN PATENT APPLICATION

(11) **EP 1 083 766 A1**
(43) Date of publication of application: **14.03.2001**
(21) Application number: 00307393.9
(22) Date of filing: 29.08.2000
(51) Int. Cl.: H04Q 7/38

(54) **Method of allocating resources in a communication system to enhance capacity**

(30) Priority: 08.09.1999 US 392033
(71) Applicant: LUCENT TECHNOLOGIES INC., Murray Hill, New Jersey 07974-0636 (US)
(72) Inventor: Seymour, James Paul, Lake Hiawatha, New Jersey 07034 (US); Tonello, Andrea M., 33031 Basagliapenta (UD) (IT)
(74) Representative: Watts, Christopher Malcolm Kelway, Dr.

(57) **Abstract**

A method for allocating network equipment of a cellular communication system to different users assigned to a particular cell thereby enhancing the capacity of the communication system without degrading the quality of communications provided to users of such a system. A user's signal is received and the strength of the signal is determined. The user is assigned to a first type or second type of network equipment based on a comparison the user's signal strength to upper and lower thresholds. The thresholds are defined by the network provider. When the signal strength is below the second threshold, the user is handed off to other network equipment of a neighboring cell. In this manner, the communication system is able to enhance its capacity while maintaining an acceptable quality of communications for its users.

## Description

### Background of the Invention

### Field of the Invention

This invention provides a method for allocating resources and assigning algorithms to users of a wireless communication system which provides enhanced system capacity.

### Description of Related Art

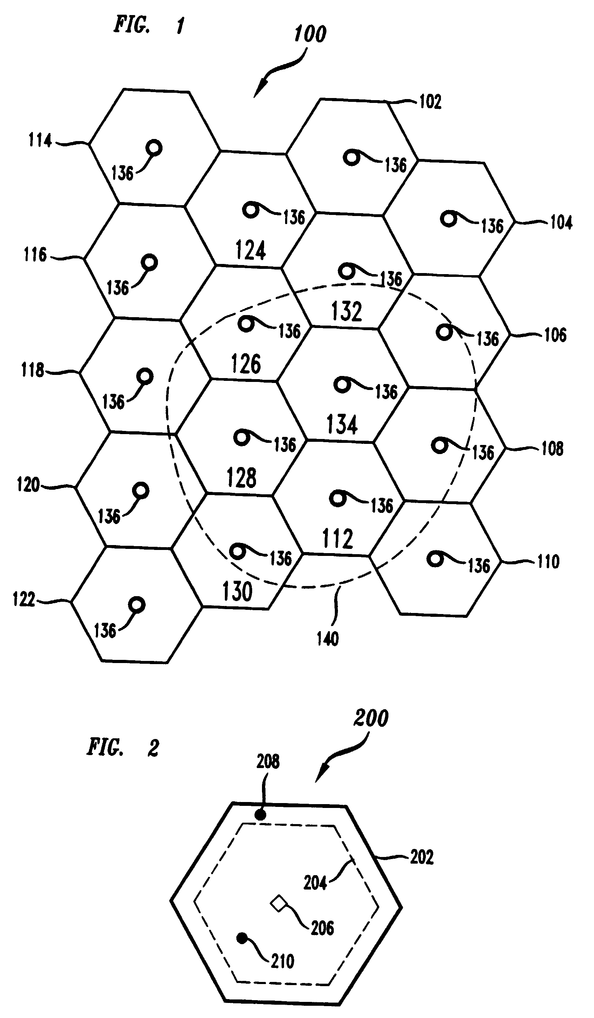

Many wireless communication systems are implemented as a cellular communication network or system. Referring to FIG. 1, there is shown a typical topology of a wireless cellular communication system. The communication system comprises a plurality of cells (e.g., 104, 106, 108) each of which comprises at least one base station (e.g., 136). The base station comprises network equipment such as radio equipment used for processing (e.g., transmitting, receiving) signals ― usually in the form of RF (Radio Frequency) signals―between users located within a particular cell or within different cells. One of the functions of the base station is to convey (i.e., transmit and receive) signals between users of the system. Also, the base station has radio equipment (e.g., digital signal processor (DSP)) that process communication signals from users which processing includes measuring the strength (i.e., signal power and/or amplitude) of signals from users and calculating the Bit Error Rate (BER) for digital signals. The bit error rate is typically defined as the ratio of the number of erroneous bits received to the total number of bits received for a certain period of time. Network providers (i.e., owners of base station equipment and other network equipment) typically use signal strength and Bit Error Rate (BER) as factors in predicting and/or determining the quality of communications obtainable between users.

The users of the communication system typically use some type of communication equipment (e.g., cellular telephone) to communicate with other users (via the network equipment) of the system or other users of another communication system that is somehow coupled to the cellular system. For example, many cellular wireless communication systems are coupled to the well known Public Switched Telephone Network (PSTN) (not shown) via a high capacity communication link (not shown). The signals conveyed between users via the base station or between users and the base station represent information such as voice, data, video or other well known information that is typically conveyed between users of a communication system. The signals are conveyed in accordance with a protocol being followed by the communication system. The protocol is a particular set of rules by which the system equipment and the user equipment initiate communication, convey information (i.e., engage in communications) and terminate communication. Typically, protocols are established communication standards that are well defined and which are followed by many communication systems. Thus communications or a communication session (e.g., telephone conversation) is the exchange of signals between a user and network equipment or between two users via network equipment (e.g., base station equipment) in accordance with the protocol being followed.

Each cell is defined as a geographical area in which users located therein convey (i.e., transmit and/or receive) acceptable signals to the base station. As shown in FIG. 1, each cell is represented by a hexagon, which is a symbolic representation of a geographic terrain or a particular physical area. A network provider typically defines an acceptable communication signal in quantitative terms. For example, for digital data signals, an acceptable signal should have a Bit Error Rate (BER) below a threshold number established by the network provider. Another factor used in defining the acceptability of a signal is the signal strength. Usually, an acceptable signal has a signal strength that is at or above a threshold defined by the network provider. Signal strength can be measured in any well known fashion such as measuring amplitude levels (i.e., voltage or current levels) or power levels (wattage). The quality of the communications provided to users of a communication system directly relates to the acceptability of the signals exchanged between users. A relatively high quality and, therefore an acceptable quality, of communication service occurs when the signals are processed (by the radio equipment) to surpass the thresholds set by the service provider. For example, an acceptable quality of communications between users occurs when the BER of the received signals is below the threshold set by the service provider and the measured received signal strengths are above the threshold set by the service provider.

Many wireless communication systems have areas or regions that are often referred to as "hot spots." A hot spot is an area within a communication system in which user activity is relatively high. The hot spots, many times, encompass more than one cell (see for example, hot spot 140 of FIG. 1) and are typically located in relatively densely populated urban or metropolitan areas. User activity is the rate at which users utilize the system for a defined period of time. For example, user activity for a cell within a hot spot is 10 calls/minute compared to another area (not a hot spot) with user activity of 2 calls/minute. In these hot spot areas, network providers are continually looking for ways to service more users (or as many users as possible) without degrading the quality of communications.

Referring now to FIG. 2, there is shown a cell (200) similar to those shown in FIG. 1. Cell 200 has base station 206 which can transmit/receive communication signals from users such as user 210 and user 208. Base station 206 comprises network equipment which include radio equipment operating at a certain frequency. The radio equipment are used to transmit and receive communication signals to and from users assigned to cell 200. A user assigned to a cell is typically located within the cell boundary and the user's signals (carrying user and system generated information) is processed by radio equipment associated with that cell. A user is assigned to a network equipment (or radio equipment) when the equipment process the user's signals and information carried by such signals in accordance with a protocol being followed by the communication system. Radio equipment process a user's signal by transmitting and/or receiving and processing the signals associated with the user in accordance with a protocol being followed by the communication system. Other network equipment such as processing equipment are used to process user and system generated information such as user billing information, protocol information and signal strength information. The processing equipment, which are coupled to the radio equipment, is located either at the base station or at some other location. An inner cell area defined by boundary 204 within which user 210 is located defines a first portion of cell 200. An outer cell area bounded boundaries 202 and 204 is a second portion of cell 200 within which user 208 is located. User 208 is located in the second portion of cell 200. Boundary 204 defines a set of locations (within cell 200) beyond which base station 206 receives degraded signals from users within cell 200. The degradation is mainly due to the relatively longer distances between a user and the base station. For example the distance between user 208 and base station 206 is longer than the distances between any user within boundary 204 and base station 206. Therefore the strength of a signal received by base station 206 from user 208 is relatively lower than the signal strength received by base station 206 from any user within boundary 204. Also, the strength of a signal received by user 208 from base station 206 is relatively lower than the strength of a signal received by any user within boundary 204 from base station 206. Therefore, signal strength and/or BER measurements can be used to determine whether the user is inside or outside boundary 204; such a determination allows the network provider to decide which resources to provide and which algorithms to apply to a user. The algorithms refer to the management of the available resources by the service provider to maintain an acceptable quality of communications to its users.

The resources are the network equipment (e.g., radio equipment, DSP equipment) and the communication channels made available to the communication system. The communication channels (defined by the communication standard being followed by the communication system) are often described as a range of frequencies or spectrum within which the communication signals should reside. Network providers often divide the available spectrum into sub-channels to increase the capacity of their communication system. However, the spectrum is limited and thus the service provider can only divide the available spectrum to a certain point without degrading the quality of communications. The capacity of a communication system is the number of users the system or a cell of the system is able to serve while maintaining an acceptable quality of communications.

Still referring to FIG. 2, boundary 202 is a cell boundary that represents a set of locations beyond which communications between a user (assigned to cell 200) and base station 206 become very difficult; that is, base station 206 receives degraded signals (e.g., signals with relatively high BER and signal strengths below an established threshold) from such a user at most times. In such a case, base station 206 can no longer effectively process that user's signals. Whenever difficult communications between a base station and an assigned user occur, the communication system activates a procedure called a "handoff." A handoff, which is described below, is a well known algorithm used by service providers in various types of wireless cellular communication systems.

A handoff is a procedure, usually compliant with the protocol being followed by the communication system, whereby communications between a base station and a user is transferred to another base station. For example, when difficult communications exist between user 208 and base station 206, network equipment at base station 206 communicate with other network equipment at base stations of neighboring cells (not shown) and provides information uniquely associated with user 208 to network equipment at the neighboring cell. Thus, the neighboring cell processes user 208; that is, user 208 is now assigned to the neighboring cell. The information uniquely associated with a user comprises such data as identification numbers, serial numbers and other information that network equipment at a base station use in processing communication signals of that user. Difficult communications typically occur with users in an outer cell area or with users located relatively near the cell boundary or beyond the cell boundary. As discussed above, the problem of difficult communications is resolved with the use of handoffs.

The goal of the network provider is to provide as much capacity to its users without causing unacceptable degradation in the quality of communications between users of the communication system. As discussed above, the use of handoffs will guard against circumstances where a user has traveled beyond distances (e.g. beyond cell boundary) where the quality of communication will degrade. However, difficult communications many times occur for users located well within the boundary of a cell. In particular, users located at the outer portion of a cell may be experiencing difficult communications. For example, referring again to FIG. 2, user 208 is located within the boundary of cell 200 but beyond inner cell boundary 204. In a case where user 208 maintaining its position beyond inner cell boundary 204 but is not traveling toward cell boundary 202, the application of the handoff procedure is not applicable. The capacity of the communication system is therefore reduced because of the system's inability to provide acceptable communications to users in the outer cell areas.

Still referring to FIG. 2, the radio equipment at base station 206 is able to adequately process (i.e., transmit and/or receive signals while maintaining acceptable communications) communication signals for users located within boundary 204. However, as discussed before, such radio equipment can only adequately process the received communication signals if the signals' strengths are above a certain threshold or if the signals' BER are below a certain threshold value. There are different radio equipment that have various capacities. Usually, the capacity of a radio equipment is inversely related to the range of such equipment. The range of a radio equipment is the distance between the equipment and a user beyond which the equipment can not adequately process signals received from the user. For example, radio equipment at base station 206 which can adequately process communication signals from users located beyond boundary 204 (as well as within boundary 204) have a longer range than radio equipment who can process adequately only those subscribers located within boundary 204. However, the longer range radio equipment usually have a lower capacity than the lower range radio equipment. The shorter range radio equipment usually have a higher capacity.

One attempt at increasing the capacity of the communication system is to use only radio equipment with longer range. However, because of their usual lower capacity, a greater number of such equipment ( which are typically more costly than the higher capacity radio equipment) would be needed to address the user capacity demand making such an approach at best relatively costly and at worst prohibitively costly and impractical.

Therefore there is a need for a method of allocating resources (e.g., radio equipment, processing equipment, communication channels) in a communication system such that the capacity of the communication system is enhanced while maintaining an acceptable quality of communications between users of the communication system.

### Summary of the Invention

The present invention provides a method for allocating network equipment for a wireless communication system such that the capacity of the communication system is enhanced while maintaining an acceptable quality of communications.

A first type and second type of network equipment are provided whereby each type has a certain capacity and range. When a user wishes to use the communication system, the user's signal strength is determined and compared to thresholds defined by a system provider of the communication system. Depending on the strength of the signal relative to the thresholds, the user is assigned to an equipment of either the first or second type. The user communication signals are monitored such that the user is assigned to the network equipment that provides adequate processing based on the user signal's strength. When neither of the equipment types are able to adequately process the user's signals, the communication system applies a handoff procedure whereby the user is assigned to other network equipment which can adequately process the user's signals. In this manner, the communication system is able to increase its capacity while providing an acceptable quality of communications to its users.

In a particular, for a wireless cellular communication system, in which each cell has a base station comprising radio equipment of a first type and a second type, the method of the present invention is implemented in the following manner: a first type of radio equipment is provided at the base station of a cell which radio equipment are able to adequately process user signals having strengths that fall above an upper threshold. The upper threshold and a lower threshold are defined by the communication system's network provider. A second type of radio equipment is also provided at the base station. The second type of radio equipment are able to adequately process only those user signals having strengths that are at one of the thresholds or between the thresholds, i.e., signal strengths that are above the lower threshold but below the upper threshold. Therefore, users whose signal strengths are above the upper threshold are assigned to the first type of radio equipment. Users whose signal strengths fall between the thresholds or are at one of the thresholds are assigned to the second type of radio equipment. Users whose signal strengths are below the lower threshold are handed off to another base station which can adequately process their signals. In this manner, users who previously could not be served by a base station because of their location (e.g., outer cell region) within a cell can now be handled by a second type of radio equipment. The second type of radio equipment have a longer range enabling such equipment to adequately process signals of lower strengths and/or higher BER. With the second type of radio equipment provided at the base station, the capacity of the cell is enhanced while the cell maintains an acceptable quality of communications to its users.

### Brief Description of the Drawings

FIG. 1 is a topology of a cellular communication network;
FIG. 2 depicts a particular cell comprising network equipment, an inner cell area and an outer cell area ;
FIG. 3 depicts the method of the present invention.

### Detailed Description

The present invention provides a method of allocating resources of a communication system to enhance system capacity while maintaining an acceptable quality of communications to the users of such a system. Network equipment receive a signal from user who is in communications with the network equipment or with another user in accordance with the protocol being followed by the communication system. The user is assigned to either a first or second type of network equipment based on a comparison of the user's signal strength with an upper and lower thresholds (i.e., signal strength values). The upper and lower thresholds are defined by the owner of the network equipment (i.e., the network provider). A signal received by the network equipment has a strength (e.g., amplitude, power level) which is measured by the network equipment and compared to network provider defined threshold levels. The network equipment determines whether the received signal strength is in one of the following categories: (1) above the upper threshold, or (2) at one of the thresholds or between the thresholds, i.e., below the upper threshold but above the lower threshold or (3) below the lower threshold. When the received signal has a strength that falls into category (1), then the user is assigned to a first type of network equipment. When the received signal has a strength that falls into category (2), the user is assigned to a second type of network equipment. When the received signal has a strength that falls into category (3), the user is handed off to other network equipment. The signal strength of the user is then monitored (continuously or continually or periodically or aperiodically) and the user is assigned to the proper network equipment as described above until user communications has ended. The thresholds are defined such that most or all users fall into one of the three categories. In this manner, the capacity of the communication system is enhanced while maintaining an acceptable quality of communications to the users.

It should be noted that the description of the network provider defined threshold are not limited to signal strength value. The threshold can be defined in terms of a signal's BER so that the upper threshold relates to a first BER and the lower threshold relates to a second BER where the second BER is higher than the first BER. A signal having a BER that falls between the first and second BER or is equal to either the first or second BER is assigned to the second type of network equipment. A signal whose BER is lower than the first BER (i.e., above the upper threshold) is assigned to the first type of network equipment. A signal whose BER is higher than the second BER (i.e., below the lower threshold) is handed off to other network equipment.

Further, another type of threshold based on BER and signal strength can be defined by the network provider. In such a case, the upper threshold is defined in terms of a higher signal strength and a lower BER and the lower threshold is defined in terms of a lower signal strength and a higher BER. In general, other characteristics (e.g., amplitude, phase, power level) of a user's signal can be used in any manner deemed proper by the network provider to define the thresholds. Regardless of the particular signal characteristic used to define the threshold, a signal falling into category 2 has a value which is substantially equal to one of the defined thresholds. The extent of the equality between the measured signal characteristic and the defined threshold depends on the precision defined by the network provider. For example a measured signal strength of -20dB may or may not be equal to a defined threshold of -19.95 dB depending on the type of precision being followed by the network provider.

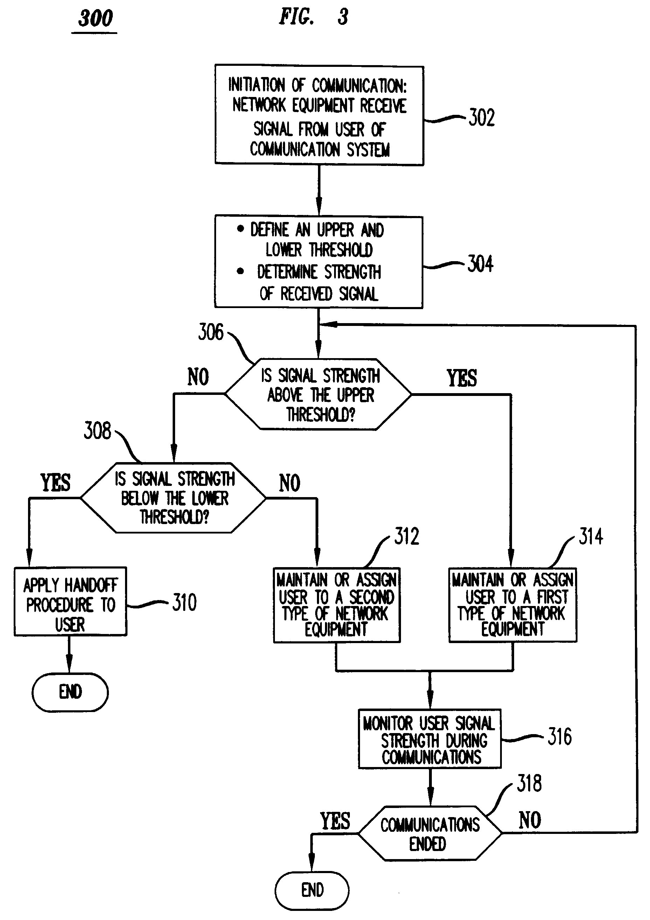

Referring now to FIG. 3, there is shown the method of the present invention. For ease of discussion, the method of the present invention is described in terms of a wireless cellular communication system as depicted in FIGS. 1 and 2. Also, for ease of discussion, the characteristic of the signal measured by the network equipment is the signal's strength and thus the thresholds are defined in terms of signal strength (e.g., amplitude or power levels). In particular, in step 302, base station 206 (of FIG. 2) radio equipment receive a signal from a user who has either initiated communications with another user or has initiated communications with the base station equipment.

In step 304, the received signal is measured for its strength. The received signal strength is measured in any well known fashion and is expressed, for example, in terms of voltage amplitude (i.e., volts), current amplitude (i.e., amperes), power level (watts) or a ratio of amplitudes or power which ratio is typically expressed in Decibels (i.e., dB). The network provider defines two threshold levels. An upper threshold is defined by the network provider such that, at any particular instant, most or all of the users engaged in communications within the inner cell area are transmitting signals having strengths that are above the upper threshold. A lower threshold is also defined by the network provider such that at any particular time, most or all of the users located in the outer cell area (bounded by boundaries 204 and 202) are transmitting signals having strengths that are above the lower threshold but below the upper threshold or equal to one of the thresholds. The network provider, for example, uses statistical analysis of measured signal strengths for different user activity at different times and at different locations (e.g., cells located in hot spots) to calculate the thresholds. Therefore, the thresholds can be chosen such that most if not all users in cell 200 fall within one of the categories described above.

In step 306, the network equipment determines whether the signal strength is above the upper threshold level. If so, the method of the present invention moves to step 314 where the user is assigned to a first type of radio equipment. The first type of radio equipment has relatively higher capacity and shorter range; it is the type of radio equipment that process user signals for users located within boundary 204 of cell 200. The particular capacities of the first type and second type of radio equipment depend on the type of communication system and the protocol being followed by that communication system. For example, for a Time Division Multiple Access (TDMA) wireless communication system in compliance with the well known IS-136 standard, the radio equipment modulate and/or demodulate communication signals as per the well known Phase Shift Keying (PSK) digital modulation scheme. The PSK digital modulation scheme allows the communication system to convey a certain amount of information (in the form of bits) depending on the type of PSK scheme being used in the communication system. In particular, for a particular period of time, a 4-PSK or QPSK (Quadrature PSK) modulation scheme transmits and/or receives less information than an 8-PSK modulation scheme. Thus, radio equipment that perform Q-PSK modulation/demodulation are better able to handle degraded signals (i.e., signals of lower strengths). In the context of the method of the present invention, an example of the first type of radio equipment comprises 8-PSK radio equipment and associated processing equipment; an example of the second type of radio equipment comprises Q-PSK radio equipment and associated processing equipment.

Returning to step 306, when the received signal strength is not above the upper threshold the method of the present invention moves to step 308. In step 308, the network equipment determines if the signal strength is below the lower threshold. If so, the method of the present invention moves to step 310 where the user is handed off to other radio equipment. The other network equipment are associated with other cells (typically neighboring cells). For example, the handoff is typically implemented by having one base station assign the user to a neighboring base station. Usually, the user being handed off is located in the outer cell area or beyond the cell boundary (i.e., boundary 202). The other radio equipment (e.g., a neighboring base station) process the user signals and also apply the method of the present invention to the newly acquired user assuming that such other network equipment are able to practice the present invention.

Returning to step 308, if the signal strength is not below the lower threshold level, then the signal strength is either between the upper and lower thresholds or is at one of the thresholds. In such a case, the method of the present invention moves to step 312 where that user is assigned to a second type of radio equipment. The second type of radio equipment have a longer range because they are able to process user signals whose strengths are somewhat degraded. However such radio equipment usually have a lesser capacity than the first type of radio equipment. Even though such radio equipment can adequately process user signals falling into the first category as described above, a preferred use of such radio equipment is to assign to such equipment only those users whose signal strengths fall into category (2). From step 312 or step 314, the method of the present invention moves to step 316.

In step 316, the user signal strength is monitored (either continuously, continually, periodically or aperiodically) and the user assignment is either maintained at the proper set of radio equipment or handed off to other radio equipment. The method of the present invention makes it possible to have intra-cell handoffs. An intra-cell handoff is where a user previously assigned to one type radio equipment is assigned to another type of radio equipment of the same cell because of a change (increase or decrease) in that user's signal strength. For example, a user whose signal strength changes such that the user previously in category 1 now falls into category 2, is handed off from the first type of radio equipment to the second type of radio equipment; that is, the user is assigned to the second type of radio equipment. Such an intra-cell handoffs occur, for example, when a user moves from an inner cell area to an outer cell area. The user signal strength is thus monitored until step 318 when communications have ended. The ending of communications is done in accordance with the protocol being followed by the communication system.

The method of the present invention is implemented with network equipment that not only process user signals but also perform the assignment of user signals to either the first type or the second type of network equipment. Therefore, either the first and/or second type of network equipment themselves or other processing equipment are able to monitor user signals, measure user signal characteristics (e.g., power, BER, amplitude ) and assign the user signal to either one type of network equipment based on a comparison to an upper threshold and a lower threshold. For example, the other processing equipment compares the user signal characteristic (received from either the first or second type of network equipment) to upper and lower thresholds stored in such other processing equipment. The first type of network equipment have a relatively higher capacity and a shorter range and the second type of network equipment have a relatively lower capacity and a longer range. The first type of network equipment, the second type of network equipment and the other processing equipment are all coupled to each other. The equipment are coupled to each other via communication links or indirectly coupled such that they axe able to exchange information (e.g., measured signal characteristic, command to assign a signal to a particular type of equipment) between each other enabling them to perform the method of the present invention as described above.

## Claims

1. A method for allocating network equipment of a communication system, the method CHARACTERIZED BY THE STEPS OF:
receiving a user signal having a certain strength; and
assigning the user to a first type of network equipment or a second type of network equipment based on a comparison of the signal strength with an upper threshold and a lower threshold.

2. The method of claim 1 further comprising monitoring the user signal strength while the user is in communications.

3. The method of claim 2 wherein the signal strength is monitored until communications have ended.

4. The method of claim 1 where assigning the user to a first type of network equipment or a second type of network equipment comprises determining whether the strength of the received signal is above the upper threshold, below the upper threshold but above the lower threshold or below the lower threshold.

5. The method of claim 4 where the user is assigned to the first type of network equipment when the user signal strength is above the upper threshold.

6. The method of claim 4 where the user is assigned to the second type of network equipment when the user signal strength is below the upper threshold but above the lower threshold or is at either the upper or lower threshold.

7. The method of claim 4 where the user is assigned to other network equipment when the signal strength is below the second threshold level.

8. The method of claim 1 where receiving a user signal having a certain strength comprises the received signal also having a certain BER.

9. The method of claim 8 where assigning the user to a first type of network equipment or a second type of network equipment comprises determining whether the BER of the received signal is above the upper threshold, below the upper threshold but above the lower threshold or below the lower threshold.

10. The method of claim 9 where the user is assigned to the first type of network equipment when the user signal BER is above the upper threshold.

11. The method of claim 9 where the user is assigned to the second type of network equipment when the user signal BER above the lower threshold and below the upper threshold or is at either the upper or lower threshold.

12. The method of claim 9 where the user is assigned to other network equipment when the signal strength is below the lower threshold

13. The method of claim 8 where assigning the user to a first type of network equipment or a second type of network equipment comprises determining whether the signal strength and BER of the received signal is above the upper threshold, below the upper threshold but above the lower threshold or below the lower threshold.

14. The method of claim 13 where the upper threshold is defined in terms of a lower BER and higher signals strength and the lower threshold is defined in terms of a higher BER and a lower signal strength.

15. The method of claim 1 where the first type of network equipment have a relatively higher capacity and a shorter range and the second type of network equipment have a relatively lower capacity and a longer range.

16. The method of claim 1 where the communication system is TDMA wireless communication system compliant with the IS-136 standard where the first type of network equipment is Q-PSK radio equipment and the second type of network equipment is 8-PSK radio equipment.

17. An apparatus for assigning a user to equipment of a communication system, the apparatus CHARACTERIZED BY THE STEPS OF:
a first type of network equipment configured to receive a user signal and measure
a characteristic of such signal;
a second type of network equipment configured to receive a user signal and measure a characteristic of such signal; and
other processing equipment coupled to the first type and second type of network equipment and configured to receive the measured signal characteristic and assign the user signal to either the first type of network equipment or the second type of network equipment based on a comparison of the measured characteristic to a lower and upper threshold.

18. The apparatus of claim 17 where the thresholds are stored in the other processing equipment.

19. The apparatus of claim 17 where the first type of network equipment, the second type of network equipment and the other processing are coupled to each other via communication links.

20. The apparatus of claim 17 where the first type of network equipment, the second type of network equipment, and the other processing equipment are coupled to each other such that they exchange information that allows a user signal to be assigned based on the comparison with the stored thresholds.

21. The apparatus of claim 17 where the first type of network equipment have a relatively higher capacity and a shorter range and the second type of network equipment have a relatively lower capacity and a longer range.
